# EUROPEAN PATENT SPECIFICATION

(11) **EP 3 093 077 B1**
(45) Date of publication and mention of the grant of the patent: **05.07.2023**
(21) Application number: 16168735.5
(22) Date of filing: 09.05.2016
(51) Int. Cl.: B08B 3/06, B08B 11/02, G02C 13/00

(54) **GOGGLE REPROCESSING ASSEMBLY**
ANORDNUNG ZUR WIEDERAUFBEREITUNG VON SCHUTZBRILLEN
ENSEMBLE POUR LE RETRAITEMENT DE LUNETTES DE PROTECTION

(30) Priority: 14.05.2015 GB 201508256
(43) Date of publication of application: 16.11.2016
(73) Proprietor: Micronclean Limited, Skegness Lincolnshire PE25 1SQ (GB)
(72) Inventor: FIRTH, Katrina Anne, Skegness, Lincolnshire PE25 1SQ (GB)
(74) Representative: Murgitroyd & Company

(56) References cited:
- EP-A1- 0 295 216
- DE-A1- 2 418 627
- JP-A- 2012 220 945
- US-A- 3 116 744
- US-A- 3 379 632
- US-A- 3 435 835
- US-A- 4 196 487
- US-A- 5 433 230
- US-A1- 2014 289 979

## Description

The present invention relates to a goggle reprocessing assembly for reprocessing (e.g. cleaning and disinfecting or sterilising) pairs of goggles.

Items which become soiled and contaminated during use in a sterile cleanroom may be discarded or reprocessed so that they can be reused. Reprocessing items individually is time consuming and expensive. Typically the reprocessing of multiple items simultaneously takes place in an industrial washing and drying machine which is specially adapted to suit the characteristics of the items to be reprocessed. For example, DE 2418627 relates to a cleaning and disinfection device for respirators which comprises a modified washing machine drum which is capable of housing caged respirators. EP 0295216 relates to a revolving head comprising compartments each provided with at least one articulated quadrilateral mechanism designed to move at least one presser shoe into a position in which a container or loose item occupying the compartment can be clamped firmly during rotation. EP 1088928 A1 relates to a holding system for retaining breathing protection masks comprising a mounting bracket disposed inside a washing machine drum. DE 102005033618 B3 relates to a device for purifying respirators comprising a closable housing with at least one respirator carrier, a nozzle for spraying the respirator and a brush assembly for cleaning the respirator. WO 2011/144518 A2 relates to a cleaning device for respirators comprising a cleaning chamber for receiving a respirator and a cleaning device for applying cleaning fluid. JP-A-2012220945 relates to a cleaner for 3D spectacles comprising a rotary cleaning tank which houses spectacle baskets, each configured for housing a plurality of spectacles, fixed in a frame. US-A-3435835 relates to a cap washing machine.

In the case of reprocessing pairs of goggles, the mechanical action of a washing and drying machine may cause damage to sensitive parts such as the lens.

The present invention seeks to improve goggle reprocessing by providing an assembly in which rigid goggle containers containing pairs of goggles can be held together in a cluster for cleaning the pairs of goggles inside a household or industrial washing and drying machine without the risk of damage.

Thus viewed from a first aspect the present invention provides, in accordance with claim 1, a goggle reprocessing assembly comprising: at least two rigid goggle containers each comprising a porous hollow body configured for housing snugly a single pair of goggles; and a porous flexible carrier suitable for carrying the at least two rigid goggle containers, wherein the porous flexible carrier comprises a closed end, an open end and a fastening device positioned at the open end, wherein the open end is at least partially closable to a selective extent by the fastening device to confine the at least two rigid goggle containers in a cluster; configured such that in use, the single pair of goggles is slidably inserted into the porous hollow body and the at least two rigid goggle containers are passed into the porous flexible carrier through the open end and confined in the cluster by at least partially closing the open end with the fastening device.

The goggle reprocessing assembly of the present invention advantageously facilitates simultaneous reprocessing of multiple pairs of goggles. This saves time and is less costly than reprocessing multiple pairs of goggles individually. By housing a single pair of goggles snugly within a rigid goggle container and confining at least two rigid goggle containers in a cluster during a washing and/or drying process so as to restrict jostling, the likelihood of damage to a sensitive part of the pairs of goggles (such as the lens) is reduced.

The at least two rigid goggle containers may be three to ten rigid goggle containers. The at least two rigid goggle containers may be four to eight rigid goggle containers. Preferably the at least two rigid goggle containers are seven rigid goggle containers.

The at least two rigid goggle containers may be the same or different. The at least two rigid goggle containers in the cluster may be tessellated or non-tessellated. The at least two rigid goggle containers in the cluster may be in rolling contact.

The at least two rigid goggle containers may be confined laterally and/or longitudinally in the cluster.

Typically the porous hollow body comprises a base and one or more elongate side walls extending from the base to support the pair of goggles. The one or more elongate side walls may be adapted to resist any tendency for the pair of goggles to slide in the porous hollow body.

The porous hollow body may be substantially goggle-sized.

Preferably the porous hollow body is a close-fit to the pair of goggles. This serves to prevent movement of the pair of goggles within (or displacement of the pair of goggles from) the porous hollow body.

Preferably the porous hollow body is configured internally to avoid contact with a lens of the pair of goggles.

The porous hollow body may comprise a lid fitted at or near to an upper circumferential edge of the one or more elongate side walls. The lid may resist any tendency for the pair of goggles to slide in or out of the porous hollow body.

The porous hollow body may be substantially cylindrical, cuboidal, hexagonal prismatic or triangular prismatic.

Preferably the porous hollow body is substantially cylindrical. The porous hollow body may comprise a cylindrical side wall which extends substantially perpendicularly from a circumferential edge of a substantially circular base. In this embodiment, the rigid goggle containers in the cluster are in rolling contact and move substantially freely against each other when confined inside the porous carrier.

In a first preferred embodiment of the present invention, the porous hollow body comprises a plurality of spaced apart apertures.

The number, position, size and spacing of the plurality of apertures may ensure a sufficient volume of washing fluid enters the rigid goggle containers to wash the pair of goggles and drains from the rigid goggle containers at the end of the washing process and/or during the drying process

In an embodiment, the one or more elongate side walls comprise a plurality of spaced apart apertures.

The apertures may be substantially uniformly spaced apart in a circumferential direction around the one or more elongate side walls by a distance which is 0.1 to 0.25 times the length of the circumferential edge of the base.

The apertures may be substantially uniformly spaced apart in a circumferential direction around the one or more elongate side walls by a distance which is 0.13 to 0.18 times the length of the circumferential edge of the base.

Preferably the apertures are substantially uniformly spaced apart in a circumferential direction around the one or more elongate side walls by a distance which is about 0.16 or less times the length of the circumferential edge of the base.

The apertures may be substantially uniformly spaced apart in a longitudinal direction along the one or more elongate side walls by a distance which is 0.1 to 0.5 times an upright length of the one or more elongate side walls.

The apertures may be substantially uniformly spaced apart in a longitudinal direction along the one or more elongate side walls by a distance which is 0.2 to 0.4 times the upright length of the one or more elongate side walls.

Preferably the apertures are substantially uniformly spaced apart in a longitudinal direction along the one or more elongate side walls by a distance which is about 0.3 or less times the upright length of the one or more elongate side walls.

In an embodiment, there may be two to ten apertures in the base (e.g. three, four, five or six apertures in the base). Preferably there are four or more apertures in the base.

Each aperture in the base may have a diameter which is 2 to 20% of a diameter of the base. Each aperture in the base may have a diameter which is 4 to 10% of the diameter of the base. Preferably each aperture in the base has a diameter which is 7% or more of the diameter of the base.

In a second preferred embodiment of the present invention, at least a part (preferably the whole) of the porous hollow body is a mesh.

The porous carrier may be porous to liquid (e.g. wash liquid for washing) and to air to assist air drying.

The porous carrier may be made of a flexible fabric. The flexible fabric may be substantially non-absorbent.

The fastening device may comprise a pair of interconnecting elements which co-operate to at least partially close the open end of the porous carrier to a selective extent.

The pair of interconnecting elements may be a drawstring and cord toggle, a zip, a stud and clasp or a hook and loop.

Preferably the pair of interconnecting elements is a drawstring and cord toggle. The drawstring may be retained in a seam at or near to the open end of the porous carrier. The cord toggle may be selectively positioned on the drawstring. The cord toggle may be slidably mounted on the drawstring.

Embodiments of the present invention will now be described by way of example only with reference to the accompanying drawings in which:
Figures la-c illustrate a perspective view of a goggle container according to a first embodiment of the assembly of the present invention;
Figure 1d illustrates a perspective view of a goggle container according to a second embodiment of the assembly of the present invention;
Figure 2 is a perspective view of a number of the rigid goggle containers shown in Figures 1a-c clustered inside a porous fabric carrier according to the first embodiment of the assembly of the present invention; and
Figures 3a-d is a plan view of various cluster patterns of differently shaped rigid goggle containers according to embodiments of the assembly of the present invention.

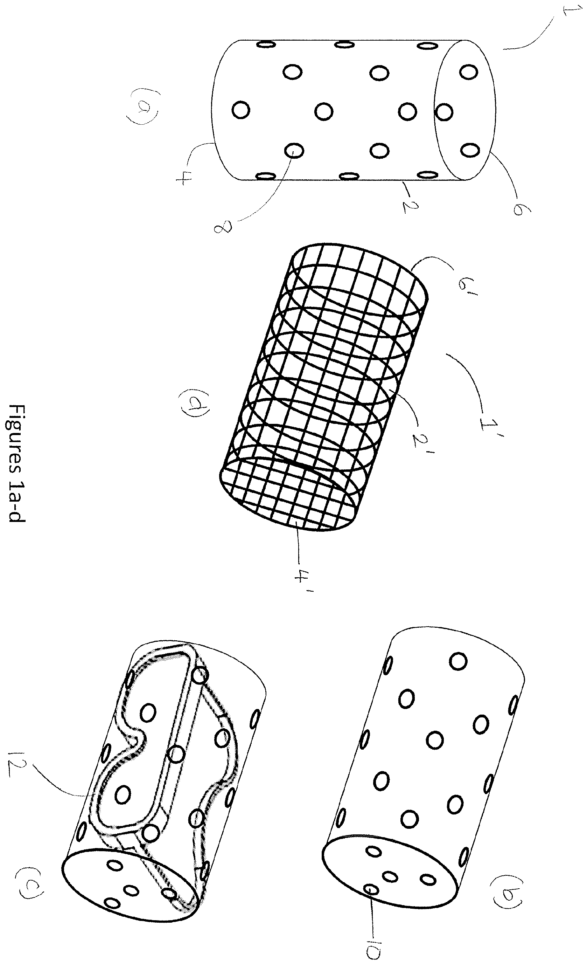

With reference to Figures 1a-c, a goggle container (1) according to a first embodiment of the assembly of the present invention comprises a porous hollow body for housing snugly a single pair of goggles (12) of the type used in (for example) a pharmaceutical cleanroom. The porous hollow body comprises a circular base (4) and a cylindrical side wall (2) which extends substantially perpendicularly from a circumferential edge of the base (4). The side wall (2) has a circumferential upper edge (6) to which (in an alternative embodiment) may be secured a lid to close the porous hollow body. In use, the pair of goggles (12) is slidably inserted into the porous hollow body. The pair of goggles (12) is held snugly by the base (4) and side wall (2) of the porous hollow body so that movement is restricted. This close-fit ensures that each lens of the pair of goggles (12) is out of contact with the base (4) and side wall (2) of the porous hollow body and avoids being damaged.

The base (4), side wall (2) and optional lid are equipped with apertures (8) which are substantially evenly spaced apart. The apertures (8) are spaced apart in a circumferential direction around the side wall (2) by a distance of a sixth of a length of the circumferential edge of the base (4). The apertures (8) are spaced apart in a longitudinal direction along the side wall (2) by a distance of a third of an upright length of the side wall (2). The base (4) and optional lid have four apertures (8) which are evenly spaced apart. The diameter of the apertures (8) is 7% of a diameter length of the base (4). By evenly spacing apart the apertures (8) according to the parameters set out above, adequate amounts of water and washing fluid are able to enter and leave the porous hollow body during a washing cycle and any drying cycle.

With reference to Figure 1d, a goggle container (1') according to a second embodiment of the assembly of the present invention comprises a porous hollow body for housing snugly a single pair of goggles (of the type shown in Figure 1c with reference numeral (12)). The porous hollow body comprises a circular base (4') and a side wall (2') which extends substantially perpendicularly from a circumferential edge of the base (4'). The side wall (2') has a circumferential upper edge (6') to which (in an alternative embodiment) may be secured a lid to close the porous hollow body. The base (4'), side wall (2') and optional lid are constructed from a mesh. During a wash and drying cycle, water and washing fluid are able to enter and leave the porous hollow body to clean the pair of goggles (12). In use, the pair of goggles (12) is slidably inserted into the porous hollow body. The pair of goggles (12) is held snugly by the base (4') and side wall (2') of the porous hollow body so that movement is restricted. This close-fit ensures that each lens of the pair of goggles (12) is out of contact with the base (4') and side wall (2') of the porous hollow body and avoids being damaged.

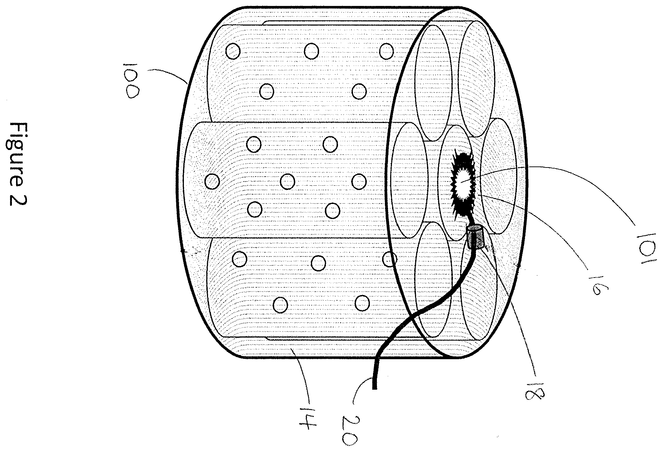

With reference to Figure 2, a porous fabric carrier (14) confines a number of the rigid goggle containers (1) of Figures 1a-c in a cluster according to a first embodiment of the assembly of the present invention. The carrier (14) has a closed end (100) and an open end (101) which is selectively closed by means of a drawstring (20) and cord toggle (18). A first segment of the drawstring (20) is retained by a seam (16) along an upper circumferential edge of the fabric which bounds the open end (101). A second segment of the drawstring (20) extends beyond the seam (16) to the exterior of the carrier (14). The cord toggle (18) comprises an elongate barrel through which extends a first radial bore and an elongate plunger slidably retained in and beyond the elongate barrel. A second radial bore extends through the elongate plunger. The second segment of the drawstring (20) passes through the first radial bore and the second radial bore.

A spring is mounted axially in the elongate barrel and engages the elongate plunger. In the resting position, the spring biases the elongate plunger to a position in which the first radial bore and second radial bore are misaligned. This serves to clasp the cord toggle (18) at a selected position on the second segment of the drawstring (20). By depressing the elongate plunger against the biasing force of the spring, the first radial bore and second radial bore are substantially aligned and the cord toggle (18) is free to slide along the drawstring (20). By judicious positioning of the cord toggle (18) on the second segment of the drawstring (20) close to the first segment, the open end (101) of the carrier (14) may be tightly closed. When closed, the rigid goggle containers are confined tightly in a cluster by the fabric which serves to minimise the possibility of damage by excessive jostling amongst the rigid goggle containers. The porosity of the fabric allows water and washing fluid to easily penetrate the carrier and access the rigid goggle containers. The fabric is easily dried and non-absorbent to reduce the drying time and the amount of heat exposure to the pairs of goggles (12).

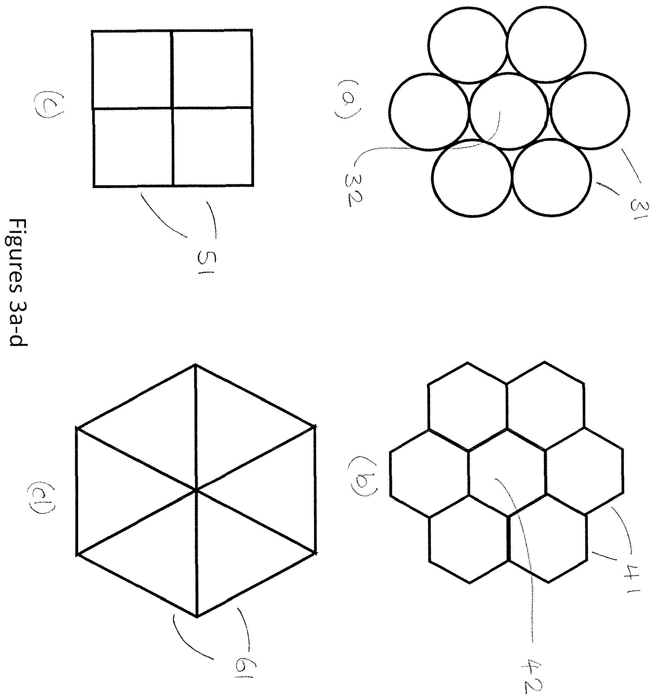

With reference to Figures 3a-d, various cluster patterns of differently shaped rigid goggle containers are illustrated. A first example of a cluster pattern is shown in Figure 3a in which six cylindrical rigid goggle containers (31) are arranged around the circumference of a central goggle container (32) in a cylindrical cluster. A second example of a cluster pattern is shown in Figure 3b in which six hexagonal prismatic rigid goggle containers (41) surround a central hexagonal prismatic goggle container (42) in a honeycomb cluster. A third example of a cluster pattern is shown in Figure 3c in which four cuboidal rigid goggle containers (51) form a cuboidal cluster. A fourth example of a cluster pattern is shown in Figure 3d in which six triangular prismatic rigid goggle containers (61) form a hexagonal prismatic cluster.

In use, a number of rigid goggle containers are confined in a cluster in a porous fabric carrier (shown for example in Figure 2) which is closed using the toggle and drawstring. The assembly is then placed in conventional washing and drying machines and the pairs of goggles are reprocessed through several modified washing and drying cycles. Typically the washing machine is set on a washing cycle with a reduced revolutions per minute (rpm) and no centrifugal extraction. This reduces the mechanical action of the wash on the assembly to prevent the pairs of goggles becoming scratched or otherwise damaged during the wash. The drying machine may be set on a drying cycle with reduced rpm and reduced temperature to lower the risk of damage to the pairs of goggles by excessive heat.

## Claims

1. A goggle reprocessing assembly comprising:
at least two rigid goggle containers (1) each comprising a porous hollow body configured for housing snugly a single pair of goggles (12); and
a porous flexible carrier (14) suitable for carrying the at least two rigid goggle containers (1), wherein the porous flexible carrier (14) comprises a closed end (100), an open end (101) and a fastening device positioned at the open end (101), wherein the open end (101) is at least partially closable to a selective extent by the fastening device to confine the at least two rigid goggle containers (1) in a cluster;
configured such that
in use, the single pair of goggles (12) is slidably inserted into the porous hollow body and the at least two rigid goggle containers (1) are passed into the porous flexible carrier (14) through the open end (101) and confined in the cluster by at least partially closing the open end (101) with the fastening device.

2. The goggle reprocessing assembly according to claim 1, wherein the at least two rigid goggle containers are seven rigid goggle containers (1).

3. The goggle reprocessing assembly according to any preceding claim, wherein the porous hollow body comprises a base (4) and one or more elongate side walls (2).

4. The goggle reprocessing assembly according to any preceding claim, wherein the porous hollow body is configured internally to avoid contact with a lens of the single pair of goggles (12).

5. The goggle reprocessing assembly according to claim 3, wherein the porous hollow body comprises a lid fitted at or near an upper circumferential edge (6) of the one or more elongate side walls (2).

6. The goggle reprocessing assembly according to any preceding claim, wherein the porous hollow body is cylindrical and a cylindrical side wall (2) extends perpendicularly from a circumferential edge of a circular base (4).

7. The goggle reprocessing assembly according to any of claims 3 to 6, wherein the porous hollow body comprises a plurality of spaced apart apertures (8).

8. The goggle reprocessing assembly according claim 7 when dependent from any one of claims 3 or 5, or according to claim 6 when dependent from claim 3, wherein the one or more elongate side walls (2) comprise a plurality of spaced apart apertures (8).

9. The goggle reprocessing assembly according to claim 8, wherein the apertures (8) are uniformly spaced apart in a circumferential direction around the one or more elongate side walls (2) by a distance which is 0.16 or less times the length of the circumferential edge of the base (4).

10. The goggle reprocessing assembly according to claim 8 or 9, wherein the apertures (8) are uniformly spaced apart in a longitudinal direction along the one or more elongate side walls (2) by a distance which is 0.3 or less times an upright length of the one or more elongate side walls (2).

11. The goggle reprocessing assembly according to claims 7 to 10, wherein there are four or more apertures (8) in the base (4).

12. The goggle reprocessing assembly according to claim 11, wherein each aperture (8) in the base (4) has a diameter which is 7% or more of a diameter of the base (4).

13. The goggle reprocessing assembly according to any preceding claim, wherein the fastening device comprises a pair of interconnecting elements (18, 20) which co-operate to at least partially close the open end (101) of the porous flexible carrier (14) to a selective extent.

14. The goggle reprocessing assembly according to claim 13, wherein the pair of interconnecting elements is a drawstring (20) and cord toggle (18).

## Patentansprüche

1. Eine Anordnung zur Wiederaufbereitung von Schutzbrillen, die Folgendes beinhaltet:
mindestens zwei starre Schutzbrillenbehälter (1), wobei jeder einen porösen Hohlkörper beinhaltet, der konfiguriert ist, um ein einzelnes Paar von Schutzbrillen (12) nicht rutschend unterzubringen; und
einen porösen flexiblen Träger (14), der geeignet ist, um die mindestens zwei starren Schutzbrillenbehälter (1) zu tragen, wobei der poröse flexible Träger (14) ein geschlossenes Ende (100), ein offenes Ende (101) und eine Befestigungsvorrichtung, die an dem offenen Ende (101) positioniert ist, beinhaltet, wobei das offene Ende (101) durch die Befestigungsvorrichtung mindestens teilweise bis zu einem selektiven Grad schließbar ist, um die mindestens zwei starren Schutzbrillenbehälter (1) in einem Bündel zu sammeln;
konfiguriert, sodass das einzelne Paar von Schutzbrillen (12) bei Verwendung durch Schieben in den porösen Hohlkörper eingeführt wird und die mindestens zwei starren Schutzbrillenbehälter (1) durch das offene Ende (101) in den porösen flexiblen Träger (14) gegeben werden und durch mindestens teilweises Schließen des offenen Endes (101) mit der Befestigungsvorrichtung in dem Bündel gesammelt werden.

2. Anordnung zur Wiederaufbereitung von Schutzbrillen gemäß Anspruch 1, wobei die mindestens zwei starren Schutzbrillenbehälter sieben starre Schutzbrillenbehälter (1) sind.

3. Anordnung zur Wiederaufbereitung von Schutzbrillen gemäß einem der vorhergehenden Ansprüche, wobei der poröse Hohlkörper eine Grundplatte (4) und eine oder mehrere längliche Seitenwände (2) beinhaltet.

4. Anordnung zur Wiederaufbereitung von Schutzbrillen gemäß einem der vorhergehenden Ansprüche, wobei der poröse Hohlkörper intern konfiguriert ist, um Kontakt mit einer Linse des einzelnen Paars von Schutzbrillen (12) zu vermeiden.

5. Anordnung zur Wiederaufbereitung von Schutzbrillen gemäß Anspruch 3, wobei der poröse Hohlkörper einen Deckel beinhaltet, der an oder in der Nähe eines oberen Umfangsrands (6) der einen oder der mehreren länglichen Seitenwände (2) angebracht wird.

6. Anordnung zur Wiederaufbereitung von Schutzbrillen gemäß einem der vorhergehenden Ansprüche, wobei der poröse Hohlkörper zylindrisch ist und sich eine zylindrische Seitenwand (2) senkrecht von einem Umfangsrand einer kreisförmigen Grundplatte (4) erstreckt.

7. Anordnung zur Wiederaufbereitung von Schutzbrillen gemäß einem der Ansprüche 3 bis 6, wobei der poröse Hohlkörper eine Vielzahl von beabstandeten Öffnungen (8) beinhaltet.

8. Anordnung zur Wiederaufbereitung von Schutzbrillen gemäß Anspruch 7 in Abhängigkeit von einem der Ansprüche 3 oder 5 oder gemäß Anspruch 6 in Abhängigkeit von Anspruch 3, wobei die eine oder die mehreren länglichen Seitenwände (2) eine Vielzahl von beabstandeten Öffnungen (8) beinhalten.

9. Anordnung zur Wiederaufbereitung von Schutzbrillen gemäß Anspruch 8, wobei die Öffnungen (8) in einer Umfangsrichtung um die eine oder die mehreren länglichen Seitenwände (2) gleichmäßig beabstandet sind, in einem Abstand, der 0,16 mal oder weniger die Länge des Umfangsrands der Grundplatte (4) ist.

10. Anordnung zur Wiederaufbereitung von Schutzbrillen gemäß Anspruch 8 oder 9, wobei die Öffnungen (8) in einer Längsrichtung entlang der einen oder der mehreren länglichen Seitenwände (2) gleichmäßig beabstandet sind, in einem Abstand, der 0,3 mal oder weniger eine aufrechte Länge der einen oder der mehreren länglichen Seitenwände (2) ist.

11. Anordnung zur Wiederaufbereitung von Schutzbrillen gemäß den Ansprüchen 7 bis 10, wobei vier oder mehr Öffnungen (8) in der Grundplatte (4) vorhanden sind.

12. Anordnung zur Wiederaufbereitung von Schutzbrillen gemäß Anspruch 11, wobei jede Öffnung (8) in der Grundplatte (4) einen Durchmesser aufweist, der 7 % oder mehr eines Durchmessers der Grundplatte (4) beträgt.

13. Anordnung zur Wiederaufbereitung von Schutzbrillen gemäß einem der vorhergehenden Ansprüche, wobei die Befestigungsvorrichtung ein Paar von miteinander verbundenen Elementen (18, 20) beinhaltet, die zusammenwirken, um das offene Ende (101) des porösen flexiblen Trägers (14) mindestens teilweise bis zu einem selektiven Grad zu schließen.

14. Anordnung zur Wiederaufbereitung von Schutzbrillen gemäß Anspruch 13, wobei das Paar von miteinander verbundenen Elementen ein Kordelzug (20) und eine Kordelklemme (18) ist.

## Revendications

1. Un ensemble de retraitement de lunettes de protection comprenant :
au moins deux récipients pour lunettes de protection rigides (1) comprenant chacun un corps creux poreux configuré pour accueillir en ajustement serré une unique paire de lunettes de protection (12) ; et
un support souple poreux (14) approprié pour supporter les au moins deux récipients pour lunettes de protection rigides (1), où le support souple poreux (14) comprend une extrémité fermée (100), une extrémité ouverte (101) et un dispositif destiné à refermer positionné au niveau de l'extrémité ouverte (101), où l'extrémité ouverte (101) peut être au moins partiellement fermée dans une certaine mesure choisie par le dispositif destiné à refermer afin de confiner les au moins deux récipients pour lunettes de protection rigides (1) dans un groupe ;
configuré de telle sorte que lors de l'utilisation, l'unique paire de lunettes de protection (12) est insérée de façon à pouvoir glisser dans le corps creux poreux et les au moins deux récipients pour lunettes de protection rigides (1) sont passés dans le support souple poreux (14) par l'extrémité ouverte (101) et confinés dans le groupe en fermant au moins partiellement l'extrémité ouverte (101) avec le dispositif destiné à refermer.

2. L'ensemble de retraitement de lunettes de protection selon la revendication 1, où les au moins deux récipients pour lunettes de protection rigides sont sept récipients pour lunettes de protection rigides (1).

3. L'ensemble de retraitement de lunettes de protection selon n'importe quelle revendication précédente, où le corps creux poreux comprend une base (4) et une ou plusieurs parois latérales (2) allongées.

4. L'ensemble de retraitement de lunettes de protection selon n'importe quelle revendication précédente, où le corps creux poreux est configuré à l'intérieur pour éviter le contact avec un verre de l'unique paire de lunettes de protection (12).

5. L'ensemble de retraitement de lunettes de protection selon la revendication 3, où le corps creux poreux comprend un couvercle installé au niveau ou près d'un bord circonférentiel supérieur (6) des une ou plusieurs parois latérales (2) allongées.

6. L'ensemble de retraitement de lunettes de protection selon n'importe quelle revendication précédente, où le corps creux poreux est cylindrique et une paroi latérale (2) cylindrique s'étend perpendiculairement depuis un bord circonférentiel d'une base (4) circulaire.

7. L'ensemble de retraitement de lunettes de protection selon n'importe lesquelles des revendications 3 à 6, où le corps creux poreux comprend une pluralité d'ouvertures (8) espacées les unes des autres.

8. L'ensemble de retraitement de lunettes de protection selon la revendication 7 lorsqu'elle dépend de n'importe laquelle des revendications 3 ou 5, ou selon la revendication 6 lorsqu'elle dépend de la revendication 3, où les une ou plusieurs parois latérales (2) allongées comprennent une pluralité d'ouvertures (8) espacées les unes des autres.

9. L'ensemble de retraitement de lunettes de protection selon la revendication 8, où les ouvertures (8) sont espacées uniformément les unes des autres dans une direction circonférentielle autour des une ou plusieurs parois latérales (2) allongées d'une distance qui fait 0,16 ou moins de 0,16 fois la longueur du bord circonférentiel de la base (4).

10. L'ensemble de retraitement de lunettes de protection selon la revendication 8 ou la revendication 9, où les ouvertures (8) sont espacées uniformément les unes des autres dans une direction longitudinale le long des une ou plusieurs parois latérales (2) allongées d'une distance qui fait 0,3 ou moins de 0,3 fois une longueur verticale des une ou plusieurs parois latérales (2) allongées.

11. L'ensemble de retraitement de lunettes de protection selon les revendications 7 à 10, où il y a quatre ou plus de quatre ouvertures (8) dans la base (4).

12. L'ensemble de retraitement de lunettes de protection selon la revendication 11, où chaque ouverture (8) dans la base (4) a un diamètre qui fait 7 % ou plus d'un diamètre de la base (4).

13. L'ensemble de retraitement de lunettes de protection selon n'importe quelle revendication précédente, où le dispositif destiné à refermer comprend une paire d'éléments d'interconnexion (18, 20) qui coopèrent pour fermer au moins partiellement l'extrémité ouverte (101) du support souple poreux (14) dans une certaine mesure choisie.

14. L'ensemble de retraitement de lunettes de protection selon la revendication 13, où la paire d'éléments d'interconnexion est une cordelette (20) et un barillet de cordon (18).
